# EUROPEAN PATENT SPECIFICATION

(11) **EP 3 986 168 B1**
(45) Date of publication and mention of the grant of the patent: **06.09.2023**
(21) Application number: 19745963.9
(22) Date of filing: 21.06.2019
(51) Int. Cl.: A23N 17/00

(54) **BOILING MACHINE**
KOCHMASCHINE
MACHINE D'ÉBULLITION

(43) Date of publication of application: 27.04.2022
(73) Proprietor: Nasekomo AD, Obshtina Stolichna, 1151 Selo Lozen (BG)
(72) Inventor: VASILEV, Kamen Nikolaev, 1750 Sofia (BG); BOLARD, Marc Louis Raymond, 1000 Sofia (BG)
(74) Representative: Lekova, Tatyana Boyanova
(86) International application number: PCT/BG2019/000013
(87) International publication number: WO 2020/252541

(56) References cited:
- CN-A- 103 766 470
- CN-A- 103 964 146
- CN-U- 202 819 468
- CN-U- 204 350 978
- CN-U- 204 429 837

## Description

### Technical Field

The present invention concerns a boiling machine which will be used for slaughtering and sterilization of larvae and especially of Black Soldier Fly Larvae. The boiling machine is intended for use in the feed industry.

### Prior Art

In Chinese Patent for a utility model CN 204429837 U is disclosed a boiling machine which includes a feeding hopper disposed over one end of a boiling water vessel just above one end of a perforated conveyer belt. The conveyer belt is mounted in the vessel and is inclined upwardly toward the end of the vessel opposite of the feeding hopper. The second end of the conveyer belt is extended out of the edge of the vessel. Under this end of the conveyer belt a collecting container is disposed. Above the conveyer belt a plurality of nozzles for boiled water are mounted. The known machine includes also a mechanism for circulation and extraction of the collected boiling water.

This known solution has a complicated architecture and the principle of boiling of the larvae does not provide sufficient sterilization of the slaughtered larvae.

### Summary of the invention

Respectively, the purpose of the present invention is to slaughter the larvae in the quickest way possible and to secure efficient sterilization of the slaughtered larvae with reliable operation and sufficient throughput. Prior studies establish that blanching in boiling water appears to be the best method of slaughter because it minimizes lipid oxidation, maximizes product decontamination and preservation and promotes removal of water, resulting in higher dry mass content. Blanching in boiling water is also found to be the fastest method to induce insect death.

These aims are achieved by the boiling machine, which includes a feeder, disposed over one of the ends of a cleated perforated conveyer belt mounted horizontally along the longitudinal axis of an operation vessel. The second end of the conveyer belt is extended out of one end of the vessel with an upward inclination outside the other end of the vessel and under it a collecting container is disposed. The machine is characterized in that under the conveyer belt plurality of air blowing nozzles are mounted and the belt is disposed under the level of the boiling water within the vessel.

It is advantageous that feeding elements are movably jointed to the bottom of the feeder, and that the feeding elements are dosing drums.

In a preferred embodiment of the boiling machine plurality of UV sterilizing lights are disposed along the middle part of the conveyer belt and water sprinkling nozzles are mounted above the end part of the conveyer belt.

In another embodiment of the boiling machine a scraping device is mounted at the edge of the conveyer belt.

Preferably the boiling machine includes also a control and automation board which is connected with power supply and via signal cabling - to the drives of the feeding elements, to supplementary heaters, to a thermal sensor disposed in the boiling water, to the air blowing nozzles, to the cleated belt motor and to the UV sterilization lights. In this embodiment of the boiling machine the control and automation board may be connected to an air blower supplying pressurized air to the air blowing nozzles.

The advantages of the present invention are concluded in that the larvae are slaughtered in the quickest way possible and a secure efficient sterilization of the slaughtered larvae is achieved with reliable operation of the machine and sufficient throughput.

### Brief description of the drawing

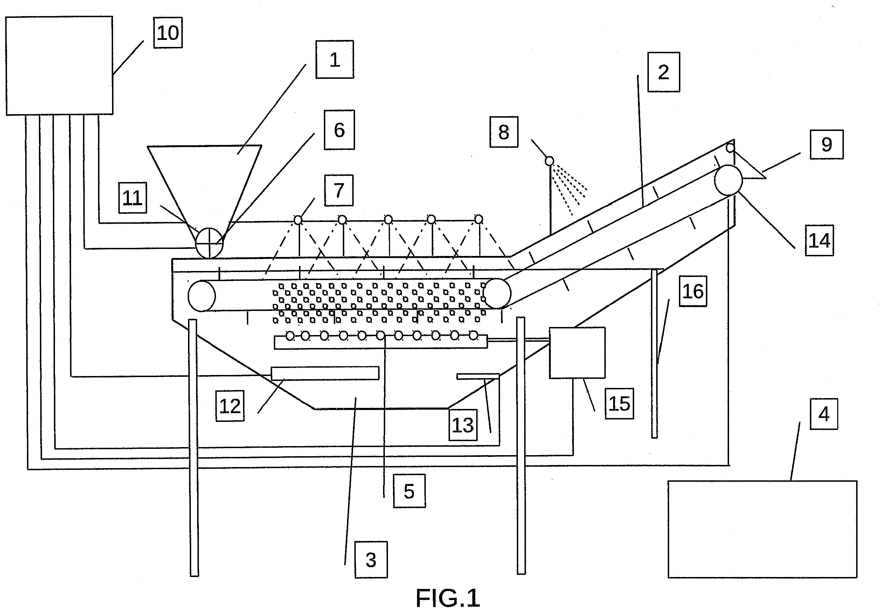

Figure 1 shows a schematic view of the machine according to the present invention.

### Embodiment of the invention

The boiling machine according to the present invention (fig. 1) includes a feeder 1, disposed over one of the ends of a perforated conveyer belt 2, which is mounted horizontally along the longitudinal axe of an operation vessel 3. The vessel 3 is filled with boiling water, where additional air bubbles are blown into the water to secure adequate mixing and quick slaughtering and efficient sterilization of the larvae. The larvae are fed from the feeder 1 into the boiling water where they are killed in a matter of seconds. The boiling water also causes the larvae to empty the contents of their guts, which improves the level of sanitation of the slaughtered larvae. The second end of the conveyer belt 2 is extended out of one end of the vessel 3 with an upward inclination outside the other end of the vessel 3 and under it a collecting container 4 is disposed. Under the conveyer belt 2 plurality of air blowing nozzles 5 are mounted and the belt 2 is disposed under the level of the boiling water within the vessel 3.

Feeding elements 6, for example dosing drums, are movably jointed to the bottom of the feeder 1. Plurality of UV sterilizing lights 7 are disposed along the middle part of the conveyer belt 2 and a water sprinkling nozzles 8 are mounted above the end part of the conveyer belt 2.

A scraping device 9 is mounted at the edge of the conveyer belt 2.

A control and automation board 10 is connected with power supply (not shown in the figure) and via power and signal cabling - to the drives 11 of the feeding elements 6, supplementary heaters 12, a thermal sensor 13 disposed in the boiling water, the air blowing nozzles 5, the cleated belt motor 14 and the UV sterilization lights 7.

The control and automation board 10 may be connected also to an air blower 15, which is connected to the air blowing nozzles 5.

The operational vessel 3 of the machine is filled with boiling water up, in which air is bubbled from submerged air nozzles 5. The cleated perforated conveyor belt 2 takes up the larvae as they fall from the feeding device 6 of the feeder 1 and transports them in air-bubbled boiling water along the operational vessel 3, providing sufficient retention time for decontamination and sterilization. UV lights 7 above the conveyor belt 2 provide additional sterilization. At the end of the boiling water the conveyor belt 2 then rises from the boiling water lifting the slaughtered and sterilized larvae out of the water. Sprinkling nozzles 8 spray boiling water onto the belt 2 providing additional rinsing of the slaughtered larvae. At the end of the conveyor belt 2 the larvae fall or are scraped into a collecting container 4.

### Use of the invention

Control and automation switchboard 10 manages the operation of the machine. The switchboard 10 is connected to the drives 11 of the feeding elements - dosing drums 6, the supplementary heaters 12, the thermal sensor 13, the air blower 15, the cleated belt motor 14 and the UV sterilization lights 7. The control board 10 manages the feeding rate of the live larvae from the feeder 1 into the boiling water by controlling the rotation speed of the dosing drums 6, the retention time of the larvae and the temperature of the boiling water for achieving required sterilization of the larvae. The temperature of the water is maintained at the highest possible point to secure quick slaughtering and efficient disinfection of the slaughtered larvae. The water temperature reading of the thermal sensor 13 is sent to the control and automation switchboard 10, which turns on the supplementary heaters 12 if the temperature drops below the set point.

After separation from the growing substrate, the live larvae are dumped into the feeder 1 of the machine. The feeder 1 is made of stainless steel or another heat-resistant material with sufficient mechanical strength and low friction. The inside surface of the feeder 1 is kept dry in order to prevent the larvae from crawling up the walls and escaping from the feeder. The feeding element 6 is fitted to the outlet of the feeder 1 towards the boiling vessel 3. The feeding element 6 may consist of one or more dosing drums. The larvae slide down into the feeding element 6 driven by gravity and by their natural reaction to dig down when disturbed. The larvae fill the dosing cavity and the rotation of the feeding element 6 transfers them into the boiling water. The feeding element 6 secures that the larvae are fed at a constant rate into the boiling water and that the mass of every batch of larvae is sufficiently small relative to the mass of the boiling water so the temperature of the water is kept at boiling temperature.

The boiling water in the vessel 3 has the dual purpose of slaughtering the larvae as quickly as possible and sterilizing them after slaughter. At correct feeding rate, the larvae are slaughtered after a couple of seconds in the boiling water. Air is bubbled from the bottom of the vessels through the air blowing nozzles 5 to facilitate the mixing of the larvae in the boiling water and the separation of any substrate remains from the larvae skins. The air nozzles 5 are fed from the blower 15. Supplementary heaters 12 in the vessel maintain the boiling temperature of the water. An overflow pipe 16 mounted at the bottom of the vessel 3 controls the required level of the boiling water and evacuates part of the contaminants, washed from the boiled larvae. The cleated perforated conveyor belt 2 transports the larvae through the vessel 3. The cleats rise slightly above the boiling water surface and move horizontally the floating larvae in each partition along the boiling vessel 3. At the end of the vessel 3 the conveyor belt 2 changes from horizontal to inclined and emerges from the water, lifting the boiled larvae from the vessel 3 on its surface. The conveyor brings the boiled larvae towards the exit of the machine and the collection container 4.

Rinsing sprinkling nozzles 8 spray boiling water onto the inclined part of the conveyor belt 2 to rinse the larvae from eventually remaining impurities after being lifted out of the water. The rinsing water is flowing back into the operational vessel 3, maintaining the required water level and making up for any evaporation and overflow losses.

The conveyor belt 2 discharges the boiled and rinsed larvae into a collection container 4 for further processing. Most of the larvae simply drop in the collection container 4 but some larvae remain on the surface of the belt 2. One or more scraping devices 9 separate the larvae from the surface of the belt 2. Depending on the exact arrangement of the belt 2 and the scraping devices 9, the scraping may be done through pneumatic or mechanical means. With pneumatic means, air is blown onto the belt surface. With mechanical scraping, plates of brushes are employed to separate the larvae from the belt surface. The plates or brushes may be mounted on a swinging assembly to overcome the cleats of the conveyor belt line.

## Claims

1. Boiling machine, which includes a feeder (1), disposed over one of the ends of a cleated perforated conveyer belt (2) mounted horizontally along the longitudinal axis of an operation vessel (3), wherein the second end of the conveyer belt (2) is extended out of one end of the vessel (3) with an upward inclination outside the other end of the vessel
(3) and under it a collecting container (4) is disposed, **characterized in that** under the conveyer belt (2) plurality of air blowing nozzles (5) are mounted and the belt (2) is disposed under the level of the boiling water within the vessel (3).

2. Boiling machine according to claim 1, **characterized in that** feeding elements (6), are movably jointed to the bottom of the feeder (1).

3. Boiling machine according to claim 2, **characterized in that** the feeding elements (6) are dosing drums.

4. Boiling machine according to claim 1, **characterized in that** plurality of UV sterilizing lights (7) are disposed along the middle part of the conveyer belt (2) and a water sprinkling nozzles (8) are mounted above the end part of the conveyer belt (2).

5. Boiling machine according to claim 1; **characterized in that** a scraping device (9) is mounted at the edge of the conveyer belt (2).

6. Boiling machine according to claims 1, 2 and 4 , **characterized in that** a control and automation board (10) is connected with power supply and via signal cabling - to the drives (11) of the feeding elements (6), supplementary heaters (12), a thermal sensor (13) disposed in the boiling water, the air blowing nozzles (5), the cleated belt motor (14) and the UV sterilization lights (7).

7. Boiling machine according to claim 6, **characterized in that** the control and automation board (10) is connected also to an air blower (15), which is connected to the air blowing nozzles (5).

## Patentansprüche

1. Eine Braumaschine, die einen Zubringer (1) umfasst, der sich über einem Ende eines perforierten Förderbandes mit Leitblechen (2) befindet, das horizontal entlang der Längsachse eines Arbeitsbehälters (3) angebracht ist, wobei das zweite Ende des Förderbandes (2) ist über das eine Ende des Gefäßes (3) hinaus mit ansteigendem Gefälle über das andere Ende des Gefäßes (3) hinaus verlängert, wobei sich darunter ein Auffangbehälter (4) befindet, **dadurch gekennzeichnet, dass** unterhalb des Förderbandes mehrere Düsen angebracht sind ( 2) zum Einblasen von Luft (5) und der Streifen (2) befindet sich unterhalb des Siedewasserspiegels im Gefäß (3).

2. Brühmaschine nach Anspruch 1, **dadurch gekennzeichnet, dass** an der Unterseite der Zuführeinrichtung (1) verschiebbar angebrachte Zuführelemente (6) angebracht sind.

3. Braumaschine nach Anspruch 2, **dadurch gekennzeichnet, dass** die Zuführelemente (6) Dosiertrommeln sind.

4. Braumaschine nach Anspruch 1, **dadurch gekennzeichnet, dass** mehrere UV-Sterilisationslampen (7) entlang des Mittelteils des Förderbands (2) angeordnet sind und Sprühdüsen über dem Endteil des Förderbands (2) für Wasser angebracht sind (8).

5. Braumaschine nach Anspruch 1, **dadurch gekennzeichnet, dass** am Rand des Förderbandes (2) eine Abstreifvorrichtung (9) angebracht ist.

6. Brühmaschine nach den Ansprüchen 1, 2 und 4 - **dadurch gekennzeichnet, dass** ein Steuer- und Automatisierungspanel (10) an eine Stromquelle und über Signalleitungen an Antriebe (11) der Zuführelemente (6), Zusatzheizungen (12) angeschlossen ist ), Temperatursensor (13) im kochenden Wasser, Luftblasdüsen (5), Prallbandmotor (14) und UV-Sterilisationslampen (7).

7. Braumaschine nach Anspruch 6, **dadurch gekennzeichnet, dass** das Steuer- und Automatisierungspanel (10) außerdem mit einem Gebläse (15) verbunden ist, das mit den Luftblasdüsen (5) verbunden ist.

## Revendications

1. Machine à bouillir comprenant une trémie de chargement (1) disposée au-dessus de l'une des extrémités d'une bande transporteuse perforée à tasseaux (2) montée horizontalement le long de l'axe longitudinal d'un récipient de travail (3), la deuxième extrémité de la bande transporteuse (2) étant rallongée au-delà de l'une des extrémités du récipient (3) avec inclinaison vers le haut au-delà de l'autre extrémité du récipient (3), un récipient de collecte (4) étant disposé au-dessous du récipient de travail qui est **caractérisé par le fait qu'**au-dessous de la bande transporteuse (2) sont montées plusieurs buses de soufflement d'air (5) et la bande (2) est disposée sous le niveau de l'eau bouillante dans le récipient (3).

2. Machine à bouillir, conformément à la revendication 1, **caractérisée par le fait que** sont accrochés, au fond de la trémie de chargement (1), des éléments de chargement qui sont susceptibles à être déplacés (6).

3. Machine à bouillir, conformément à la revendication 2, **caractérisée par le fait que** les éléments de chargement (6) représentent des tambours de dosage.

4. Machine à bouillir, conformément à la revendication 1, **caractérisée par le fait que** sont disposés, le long de la partie médiane de la bande transporteuse (2), plusieurs lampes ultraviolettes stérilisantes (7) et au-dessus de la partie extrême de la bande transporteuse (2) sont montées des buses de pulvérisation d'eau (8).

5. Machine à bouillir, conformément à la revendication 1, **caractérisée par le fait qu'**un dispositif à râper (9) est monté sur le bord de la bande transporteuse (2).

6. Machine à bouillir, conformément aux revendications 1, 2 et 4, **caractérisée par le fait qu'**un tableau de commande et d'automatisation (10) est branché à une source d'alimentation et par un câblage de signalisation, il est connecté aussi aux propulsions (11) des éléments de chargement (6), aux dispositifs de chauffage supplémentaire (12), à un capteur thermique (13) disposé dans l'eau bouillante, aux buses de soufflement d'air (5), au moteur de la bande à tasseaux (14) et aux lampes ultraviolettes stérilisantes (7).

7. Machine à bouillir, conformément à la revendication 6, **caractérisée par le fait que** le tableau de commande et d'automatisation (10) est connecté aussi à un ventilateur compresseur (15) qui est connecté aux buses de soufflement d'air (5).
